# EUROPEAN PATENT APPLICATION

(11) **EP 3 121 724 A1**
(43) Date of publication of application: **25.01.2017**
(21) Application number: 15306207.0
(22) Date of filing: 24.07.2015
(51) Int. Cl.: G06F 11/30, G06F 11/07, G06F 11/14

(54) **METHOD FOR MONITORING A SOFTWARE PROGRAM AND CORRESPONDING ELECTRONIC DEVICE, COMMUNICATION SYSTEM, COMPUTER READABLE PROGRAM PRODUCT AND COMPUTER READABLE STORAGE MEDIUM**

(71) Applicant: Thomson Licensing, 92130 Issy-les-Moulineaux (FR)
(72) Inventor: LE GARJAN, Bruno, 35576 Cesson-Sévigné (FR); CRUNCHANT, Sébastien, 35576 Cesson-Sévigné (FR); RIBIERE, Jean-Claude, 35576 Cesson-Sévigné (FR)
(74) Representative: Huchet, Anne

(57) **Abstract**

The disclosure relates to a method to be performed in an electronic device, for monitoring the execution of a software program including at least one watched process, the monitoring method including periodic reading, by a supervisor process, of a memory zone shared by the watched process and the supervisor process.

According to an embodiment, the method further includes conditional forcing, by the supervisor process, of a booting of a watched process of the software program, the conditional forcing taking into account an update of a first read memory zone between two successive readings and a previous conditional forcing.

The disclosure also relates to the corresponding electronic device, communication system, computer readable program product and computer readable storage medium.

## Description

### 1. Technical field

The present disclosure relates to the field of software programs that are used for driving at least an electronic device.

A method for monitoring a software program and corresponding electronic device, communication system, computer readable program product and computer readable storage medium are described.

### 2. Background art

Many electronic devices, like Set Top Boxes (STB), gateway (GTW), smart phones, network connected devices are often controlled thanks to a software program. A software program usually comprises several processes, which themselves can comprise one or more software threads. One definition of a thread (or execution thread), in the technical field of the present disclosure, can be "the smallest sequence of programmed instructions that can be managed independently by a scheduler , which is typically a part of an Operating System. Multiple threads can exist within the same process, executing concurrently (one starting before others finish) and share resources such as memory ( WIKIPEDIA-https://en.wikipedia.org/wiki/Thread_(computing)#cite_note-1).

It is to be noted that herein the term "software program" can comprise, in some embodiments, several software processes executing independently and eventually communicating together (for instance thanks to technics known as Inter Process Communication (IPC) technics).

Such an electronic device can have an abnormal behavior or even not respond anymore to some user commands if one of the processes of its software program unexpectedly exits or crashes itself, or if one of the threads of one of those processes is blocked (for example in a dead-lock or an endless loop), or if one of those threads monopolizes a processing resource, for example in an infinite loop due to a defect, or if it requires an abnormal amount of resources (like in memory leak issues).

Solutions have been searched in order to identify and/or remedy to such defective situations. In some known solutions, an observer process can monitor periodically the processes and their processing and memory usage in order to detect abnormalities.

For example, when the Operating System is LINUX or UNIX, this observation can be done by a "ps" command. Such monitoring can detect that a process has disappeared, or takes too much processing time or memory, or uses no processing time for a long time (and thus can is perhaps blocked).

However, such a solution is not adapted to secured software as it is based on the use of resource (like system call) that are often not allowed in a secured environment. Indeed, broadcasters or services providers often require the electronic device that is used to perform their services to work in such a secured environment, in order to limit the capacity of damage of a malicious software program. One of their requirements is usually to limit the use of system calls at an application level. For example, in a LINUX environment, a "ps" command (or other command located in the "/proc" directory) is not available in an application level. More generally, any system call that is not necessary to implement the essential features of the electronic device is not allowed at an application level.

So, there's a need to provide a solution for monitoring processes better adapted to a secured environment compared to prior art solutions.

### 3. Summary

The present principles enable at least one of the above disadvantages to be resolved by proposing a method, to be performed in at least on electronic device, for monitoring the execution of a software program comprising at least one watched process, said monitoring method comprises periodic reading, by at least one supervisor process, of at least one memory zone shared by said watched process and said supervisor process.

According to an embodiment of the present disclosure, said method further comprises:
- conditional forcing, by said supervisor process, of a booting of at least one process of said software program, said conditional forcing taking into account an update of a first read memory zone between at least two successive readings and at least one previous conditional forcing.

For instance, the forcing can relate to the watched process, to several processes including to the watched process, to the main process of the software program.

According to an embodiment of the present disclosure, said method is performed in a single electronic device.

According to an embodiment of the present disclosure, said method further comprises maintaining, by said supervisor process, at least one boot counter located in a first non-volatile memory zone of said electronic device, a boot counter being representative of a number of boots of a process of said software program.

According to an embodiment of the present disclosure, said boot counter is representative of at least one item belonging to a group comprising:
- a number of boot of said watched process;
- a number of boot of said supervisor process;
- a number of boot of a main process of said software program.

According to an embodiment of the present disclosure, said conditional forcing takes into account at least one element belonging to a group comprising:
- a number of consecutive forced boots of said watched process;
- a number of consecutive forced boots of said supervisor process;
- a number of consecutive forced boots of a main process of said software program;
- a number of consecutive forced boots of said supervisor process related to said watched process;
- a number of consecutive forced boots of a main process of said software program related to said watched process;
- a number of forced boots of said watched process during a reference period of time ;
- a number of forced boots of said supervisor process during a reference period of time ;
- a number of forced boots of a main process of said software program during a reference period of time ;
- a number of forced boots of said supervisor process related to said watched process during a reference period of time;
- a number of forced boots of a main process of said software program related to said watched process during a reference period of time.

According to an embodiment of the present disclosure, said conditional forcing further depends on the sensitivity of said watched process.

By "sensitivity" of a watched process, it is to be understood herein how much a watch process is critical, or in other terms a level of risk for the software program, the device where the software program is implemented, and/or the private data or the welfare of a user of the device to be affected, if the watched process is malfunctioning (for instance is stopped, blocked, ...).

According to an embodiment of the present disclosure, said software program comprises a plurality of watched processes and the memory zones of at least two watched processes are adjacent.

According to an embodiment of the present disclosure, said monitoring method further comprises:
- a reacting of said supervisor process taking into account an update of a second read memory zone between at least two successive readings.

According to an embodiment of the present disclosure, said conditional forcing further comprises generating an alert according to the update of said first and/or second read memory zone.

According to an embodiment of the present disclosure, said shared memory zone is only accessible by said watched process and said supervisor process.

According to an embodiment of the present disclosure, said monitoring method comprises:
- launching of a monitored thread, by said watched process ;
- periodic writing, by said monitored thread, of an item of information in said shared memory zone.

According to an embodiment of the present disclosure, said item of information comprises at least an element belonging to a group of elements constituted of:
- an identifier of said watched process;
- an incremental counter;
- a time stamp of said writing;
- a monitoring data related to said watched process.

Such a monitoring data can be any data useful for the monitoring of the watched process, like a memory usage, a processing usage, an error indicator (like a number or a type of error), a delay for performing some actions (for instance a meant delay, a maximum delay, a minimum delay,..).

According to another aspect, the present disclosure relates to an electronic device, comprising at least one memory and at least one processor, said processor being configured for monitoring the execution of a software program comprising at least one watched process, said monitoring comprising periodic reading, by at least one supervisor process located in said electronic device, of at least one memory zone shared by said watched process and said supervisor process.

According to an embodiment of the present disclosure, said processor is configured for:
- conditional forcing, by said supervisor process, of a booting of at least one process of said software program, said conditional forcing taking into account an update of a first read memory zone between at least two successive readings and at least one previous conditional forcing.

According to another aspect, the present disclosure relates to a system comprising at least one first and one second electronic devices, said first electronic device comprising at least one memory and at least one processor, said processor being configured for monitoring the execution of a software program comprising at least one watched process located in said second device, said monitoring comprising periodic reading, by at least one supervisor process located in said first electronic device, of at least one memory zone shared by said watched process and said supervisor process.

According to an embodiment of the present disclosure, said processor is configured for:
- conditional forcing, by said supervisor process, of a booting of at least one process of said software program, said conditional forcing taking into account an update of a first read memory zone between at least two successive readings and at least one previous conditional forcing.

While not explicitly described, the electronic device or the communication system of the present disclosure can be adapted to perform the method of the present disclosure in any of its embodiments.

While not explicitly described, the present embodiments related to a monitoring method or to the corresponding electronic device or communication system can be employed in any combination or sub-combination. For example, some embodiments of the monitoring method can involve a conditional forcing depending on the sensitivity of said watched process and generating an alert according to an update of said first and/or second read memory.

According to another aspect, the present disclosure relates to a non-transitory program storage device, readable by a computer.

According to an embodiment of the present disclosure, said non-transitory computer readable program product tangibly embodies a program of instructions executable by a computer to perform the monitoring method of the present disclosure in any of its embodiments.

According to another aspect, the present disclosure relates to a computer readable storage medium carrying a software program comprising program code instructions for performing the method of the present disclosure, in any of its embodiments, when said non transitory software program is executed by a computer.

### 4. List of drawings.

The present disclosure will be better understood, and other specific features and advantages will emerge upon reading the following description, the description making reference to the annexed drawings wherein:
- Figure 1 shows an example of a software program implementing a particular embodiment of the monitoring method of the present disclosure;
- Figure 2 is a functional diagram that illustrates a particular embodiment of the monitoring method of the present disclosure, compatible with the embodiment illustrated by figure 1; and
- Figure 3 illustrates an electronic device adapted to at least one particular embodiment of the present disclosure.

It is to be noted that the drawings have only an illustration purpose and that the embodiments of the present disclosure are not limited to the illustrated embodiments.

### 5. Detailed description of the embodiments.

At least one embodiment of the present disclosure offers a new way of monitoring processes of a software program that are executing in at least an electronic device.

According to at least an embodiment, the software program comprises at least one process (called "watched process") to be watched by at least one supervisor process. Depending upon embodiments, a supervisor process can be part of the software program or can execute independently. A watched process and a supervisor process watching this watched process shares a memory zone. The supervisor process checks periodically if the memory zone have been updated by the watched process and reacts in case if the memory zone has not been updated. This reacting can notably include forcing a boot (or in other word a terminating followed by a launching) of at least one process of the software program (for instance a watched process, or a main process of the software program, or all processes of the software program located on an electronic device, ...).

Such an embodiment offer a simple and portable way of monitoring a software program, as at least all processes except the supervisor processes do not need to be Operating System (OS) dependent or to use specific libraries or program that could compromise the security of the electronic device.

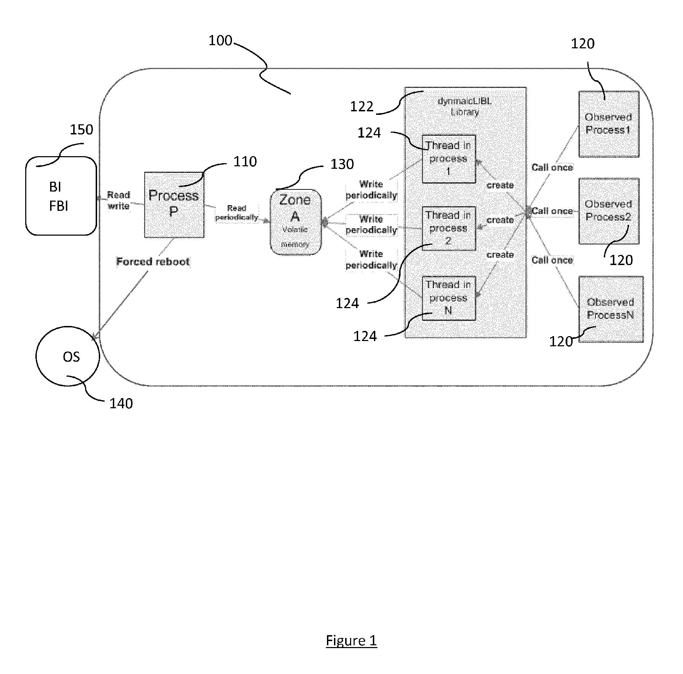

Furthermore, a supervisor process itself can have a limited access to OS calls 150. In the embodiment of figure 1, for instance, where the Operating System is LINUX, the supervisor process has only been provided with a "CAP-SYS-BOOT" capacity.

In other embodiment, even a supervisor process does not have to use a system call. For instance, in an embodiment with only one supervisor process being the main process of the software program, the supervisor process can just terminate (for instance by assigning a specific value to a variable assessed in a loop of the main process, the specific value being the condition for exiting the loop).

According to the present disclosure, the booting of a process of the software program is performed conditionally. Indeed, even if done in the purpose of solving a problem raised during the execution of the software program, like an abnormal behavior of at least one thread of a process of the software program, repeated forced reboots can lead to a situation being considered as worse, at a user's point of view, than the abnormal behavior of the software program. For instance, a user can rather experience a Set Top Box letting him watch the latest episode of his favorite series, even if he can't record it, than a Set Top Box which can record the episode but reboots every five minutes.

In the detailed embodiment illustrated in figure 1, a software program 100 is described more precisely.

The software program 100 of figure 1 comprises at least one watched, or observed, process 120 and at least one supervisor process 110, in charge of monitoring the state of at least one of watched processes 120. In some embodiments, as illustrated in figure 1, a single supervisor process P 110 monitored all the processes 120 to be watched (like Process 1, Process 2, ...Process n of figure 1). In other embodiments, the software program 100 can comprise several supervisor processes. Depending upon embodiments, a process can be watched by a unique supervisor process, or by several supervisor processes. Such a later embodiment can be useful for very critical (or sensitive) watched processes and/or for fault-tolerant software environment and can eventually permits a continuous monitoring of a watched process even if one of the supervisor process encountered itself a problem.

Depending upon embodiments, all the processes of the software program can be watched by another process (with some process acting concurrently as a watched process and as a supervisor process watching at least another process), or only a part of the processes of the software program can be watched. For instance, a process, not being itself watched, can be dedicated (as a supervisor process) to the watch of the other processes of the software program. In other embodiments, that can eventually be combined with some of the preceding embodiments, only the critical processes, being mandatory for a main, or normal, usage of the electronic device are watched by a supervisor process. In an embodiment comprising at least two supervisor processes, a supervisor process can be watched by another supervisor process and vice-versa.

Depending upon embodiments, the software program can execute in a single electronic device, or in a distributed system, comprising at least two electronic devices. In such an embodiment, no assumption is made about the location of the at least one supervisor process, the at least one watched process, and the shared memory zone(s).

In the illustrated embodiment of figure 1, each watched process calls a monitoring service of a dynamic library 122 (like the dynamic library "LibL" of figure 1), which itself launches a thread 124 in charge of periodically writing in a memory zone 130 shared at least with a supervisor process. In the particular embodiment of figure 1, all memory zones are contiguous. They are located in a volatile memory zone A.

The monitoring service can be for instance a first function or a method that can be called once by any process to be monitored according the monitoring method of the present disclosure. The monitoring service launches a thread (T1) 124 in each process 120 with a given priority. In the detailed embodiment, the thread 124 is attributed a very high priority (for instance the highest priority). This thread periodically (for instance each second, each five seconds, or each ten seconds) writes in a specific part of the memory zone A 130 shared with the supervisor process 110, at least one item of information that is representative of the watched process 120 being alive and in a normal state. In the embodiment described, the access to the memory zone 130 is restricted by access rights. For instance, each watched process is provided with a writing right and the supervisor process is provided only with a reading right.

Giving a high priority to the monitored thread can permit to avoid the situation where the detection of a blocked thread or process is uncertain as a process, which is inactive because it has no task to perform, cannot be distinguished from a blocked process.

For instance, for a given watched process, the written item of information can comprise:
- a current time obtained by a monotonic clock (i.e. a clock delivering a time always growing regularly)
- a process identifier (PID) of the given watched process.

Depending upon embodiments, a first shared memory zone, related to a first watched process, can be disjoint or contiguous with a second shared memory related to a second watched process. In the detailed embodiment, a specific memory zone A 130 can gather items of information related to each watched processes. For instance, if Process 1, Process 2, ..., Process N are watched (as illustrated by figure 1), the specific memory zone A can comprise the following items of information:
(pid1, latest-time 1),
(pid2, latest-time 2),
...
(pidN, latest-time N).
Where:
- "PIDi" is the process identifier of Process i;
- "latest-time i" is the time (given by a monotonic clock for instance) of the latest writing by process "i" in a memory zone shared by process "i" and a supervisor process of the specific memory zone A 130.

In other embodiments, the item of information related to a watched process can comprise an incremented counter, or any other information that permit to verify an access of the watched process to the shared memory zone since a previous reading of the shared memory zone by a supervisor process.

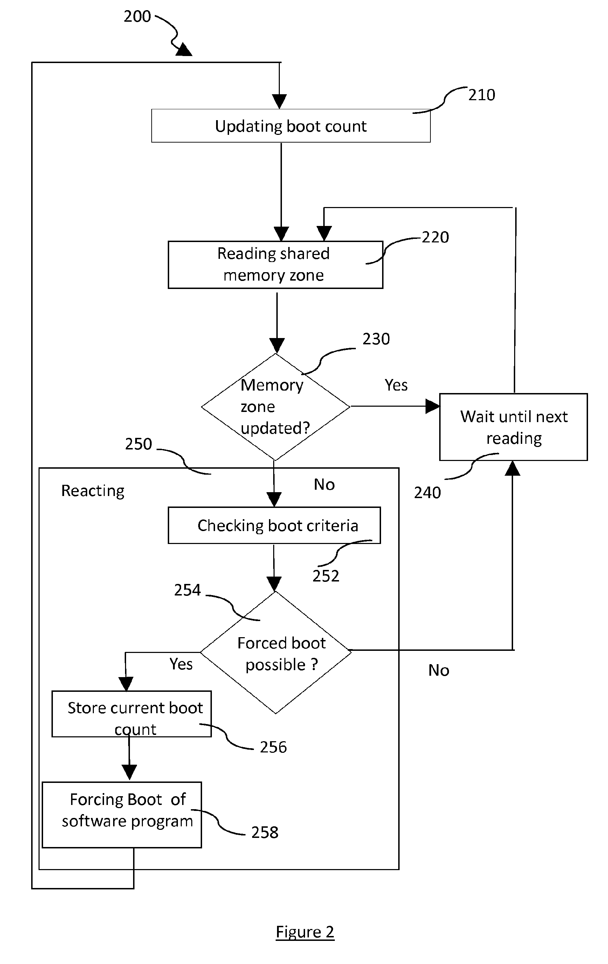

**Figure 2** describes the monitoring method in a particular embodiment of the present disclosure, compatible with the embodiment of figure 1.

According to the illustrated embodiment, the method 200 is performed in a supervisor process 110. In the particular embodiment of figure 2, the supervisor process is systematically launched during the boot of the software program 100.

As illustrated, the method 200 comprises maintaining a boot counter, called herein a boot index (BI) that indicates the number of boots of the software program and is incremented for each time the software program is rebooted. This boot rank index can be stored for instance in a non-volatile memory zone 150 of the electronic device, like in a flash memory file.

In the particular embodiment described, the method 200 can comprise, during the start of the boot process, an updating 210 of the counter. Of course, in other embodiment, the updating 210 can be done before a terminating of the software program.

According to the illustrated embodiment, the method 200 comprises reading 220 at least one memory zone (like a part of the zone "A" 130 of figure 1) shared by the supervisor process and a watched process that is executing concurrently to said supervisor process.

In some embodiment, the items of information related to each process watched by a supervisor process can be similar. Such an embodiment permits to have a unified reading by a supervisor process and thus, leads to a simpler implementation of the supervisor process. In particular, in some embodiments that involve several supervisor processes, all the reading performed by the supervisor processes can be similar. In other embodiments, the item of information written in the shared memory zone by a watched process can differ upon watches processes. Such embodiment can permit to take into account different environments, or constraints, of the watched processes. It can also permit to watch legacy processes used in a software program.

The reading 220 is performed periodically, for instance each 3 seconds, or each 5 seconds, or each 10 seconds, or each 20 seconds. In some particular embodiment, like when the Operating System is LINUX, the priority of the supervisor process can be chosen lower than the priority of each thread using the monitoring service.

In the embodiment illustrated, where a watched process is periodically writing in the shared memory zone, the reading period in the shared memory zone is chosen in order to be bigger than the writing period of the watched process. Thus, as the time interval between two reading of a given shared memory zone is superior to the periodicity of invocation of the monitoring service, at least one new writing (by a watched process) should be performed in the given shared memory zone during the time interval between two readings. So, a lack of updating of the shared memory zone during this time interval can be considered as symptomatic of an abnormal behavior of a watched process. The abnormal behavior of a watched process can be caused for instance by a thread of the watched process being blocked or by a termination of the watched process. It is to be noted that, in some embodiments where the thread in charge of the writing in the watched process is given a very high priority, even the highest priority, compared to the other threads of the watched process, there is a very low probability (even no probability) that another thread jeopardizes the resource allocated to the process, thus preventing the monitored thread to write in the shared memory zone. At the opposite, a termination of the watched process has a high probability.

The method 200 also comprises a verifying 230 if an update of the shared memory zone has occurred since last reading. In the detailed embodiment, the shared memory zone contains notably the time of the latest writing by a watched process. Thus, a lack of new writing can be detected by an elapsed time since this latest writing being superior to the time elapsed since the previous reading by the supervisor process. In the detailed embodiment, where the reading is performed periodically and the supervisor process is assigned the highest priority, amongst all processes of the software program, the time elapsed since the previous reading can be considered (even with some approximation) as being a time period of the readings.

In other embodiments, for instance where the item of information written by a watched process comprises an incremental counter, the method can comprise comparing the item of information read in the shared memory zone with at least an item of information previously read and stored by the supervisor process (for instance, the latest memorized item or a previously memorized item). It can also comprise a storing of the newly read item of information.

In the illustrated embodiment where the supervisor process is dedicated to a monitoring of watched processes, when an update has occurred, the method comprises waiting 240 for the time period for another reading to be elapsed (either for the reading of the same shared memory zone, or for the reading of a memory zone shared with another watched process).

In the detailed embodiment, when no update of a memory zone shared with a given watched process has occurred since last reading of a supervisor process, the method comprises a reacting 250 of the supervisor process. The reacting 250 can comprise a conditional forced booting 258 of a process. A forced booting can be performed according to at least one boot criterion.

In the illustrated embodiment, when no update has occurred since a previous reading of the concerned shared memory zone, the method can comprise a checking 252 of at least one boot criteria, before performing (or not) a forced reboot 258 according to this boot criteria. In some embodiment, a first boot criterion can be for instance a comparison of the current number of forced reboots with a given threshold (for instance a maximum number of consecutive forced re-boots). In other embodiments, it can be a comparison of the current number of boots (given by the boot index BI updated 210 by the supervisor process) with a given threshold (for instance a maximum number of boots).

In still other embodiments, where the method comprises a storing of the time of each forced reboot, it can be a comparison of the current number of forced re-boots, or consecutive forced re-boots, during a specified duration (for instance an hour, four hours, a day, ...) with a given threshold (for instance a maximum number of forced re-boots to be performed in the specified duration).

In the illustrated embodiment, a first given boot criteria is a current number N of consecutive forced reboots, since last normal, un-forced boot of the software program, being less to a given, maximum, number of consecutive forced re-boots. A "normal" boot can be for instance a boot performed manually by a user (for instance by a powering off followed by a powering on of the electronic device). If the number of consecutive forced boot is equal or superior to the given maximum number of consecutive forced re-boots, then no forced boot 258 will be performed.

Depending upon embodiments, the supervisor process can terminate itself or can continue to execute (and eventually continue to monitor the concerned watched process). When the software program terminates normally (for instance because of the electronic device is being powered off by a user), the current number of consecutive forced boots will be reset to zero.

In the illustrated embodiment, each time a forced boot is possible 254, the method comprises storing 256 the value of the current boot index (called herein "forced boot index" (FBI)) and forcing a boot of the software program. Depending of embodiments, only the latest (current) value of the forced boot index or several values of the forced boot index can be stored. For instance, in some embodiment, the N latest values of the Forced Boot index can be stored. In other embodiments, all the values of the Forced Boot index, since the boot of the supervisor process, can be stored. The forcing 258 can comprise for instance a termination of a main process of the software program. A boot of the software program can be performed automatically after a termination thanks to a watch dog for instance.

The checking 252 of the boot criteria can comprise a computation of at least one forced boot index (stored during previous storing 256) according to the current boot index value.

In the example below, the current number of boot (forced or due to the electronic device being powered off), represented by the current value of the boot index, is 127, and the maximum number of consecutive forced boots is 3.

In a first example, if the stored sequence of forced boot indexes is (12, 30, 100, 124, 125, 126), that means that boots which boot index values 124, 125 and 126 are forced boots and that the last "normal" boot has the index value 123. Thus, as forced boot indexes 124, 125 and 126 are consecutive values, the number of consecutive forced boots since last "normal" boot is 3. Thus, the maximum number of consecutive boots admitted is reached and a forced boot will not be possible.

In a second example, if the stored sequence of forced boot indexes is (12, 30, 100, 120, 125, 126), that means that boots which boot index values 125 and 126 are forced boots and that the last "normal" boot has the index value 124. Thus, the number of consecutive forced boot since last "normal" boot is 2. Thus, the maximum number of consecutive boots admitted is not reached and a forced boot is still possible.

In the illustrated embodiment, if it is possible 254 to performed a forced boot (because the threshold is not reached), the method comprises storing 256 the current boot rank index before forcing 258 a boot of a process of the software program.

In some embodiments, verifying 254 that a forced reboot is possible can comprise interaction with a user of the electronic device, in order to inform the user about the planned forced boot, and eventually to get his approval before. For example, an alert message can be rendered (like a textual message, visual message or an audio message) on a user interface of the electronic device. For instance, a Light Emitting Diode (LED) can be illuminated in a special way, or a pop up message been displayed (like "unmanageable error - the set top box will reboot in 5 seconds").

In some embodiments, a validation of the forced reboot can be received from the user.

For instance, the conditional forced booting can comprise terminating and booting the watched process or the main processes of the software program or performing a restart of the electronic device. An embodiment where a restart of the electronic device is performed can avoid a user to reboot manually its electronic device.

In some embodiment (for instance when only the watched process is forced to reboot), it can also comprise deleting of the item of information present in the memory zone shared with a watched process that is to be forced to reboot, or writing of a default value (for instance 0000), in order to avoid a false detection of a new problem relating to the watched process, during its booting, because of the time elapsed before the first writing by the rebooted process in the shared memory zone. Depending upon embodiments, this deleting can be performed by the supervisor process (for instance before or after the terminating and/or the booting), and/or by the watched process itself, like during its termination and/or its initialization.

Furthermore, in some embodiments where some watched processes are launched again automatically when they terminate (for instance thanks to a software utility like Cron with an Operating System like Unix or Linux), the item of information of the shared memory zone can comprise some data (for instance a name of a watched process) that permits the supervisor process to recognize a watched process that is just launched again.

In some embodiments, the reacting 250 can also comprise a storing of data (like the current time and/or the last item of information read in the shared memory zone) in a log file for instance, for debug and maintenance. The data can be stored in a log file, for instance a log file located in a non-volatile RAM (like a flash memory, and/or a hard disk, or a removable storage like a USB key) of the electronic device, so that it can be further accessed, either locally or remotely, and collected.

In other embodiments, that can eventually be combined with some of the preceding embodiments, a status message can be sent to a remote equipment for problem history collection (with or without an authorization of the user).

In some embodiments, adapted for instance to secured environments, a shared memory zone can only be accessed by two particular processes: a particular process to be watched and a particular supervisor process, in charge of its watching. Such a solution can rely on a check of process identifiers. For instance, both processes can be configured as belonging to a particular group of process. In some other embodiments, that can eventually be combined with some of the preceding embodiments, the item of information contained in the shared memory zone can be encrypted.

In still other embodiments, that can eventually be combined with some of the preceding embodiments, the boot index and the forced boot index can be stored in memory zone that can only be accessed, either in reading and/or writing, to a particular supervisor process, or can be encrypted.

According to the embodiment illustrated in figure 1, a supervisor process can be part of the software program and can force a boot of a main process of the software program or a restart of the electronic device where the software program is located (and thus its own boot). Of course, in some other embodiments, a supervisor process can force a boot of at least one watched process, or be launched independently to the software program to be monitored. In such embodiments, the counting of boots or of forced boots can be performed lightly differently, as it will be evident for a person skilled in the art after the reading of the present disclosure.

Indeed, in the detailed embodiment, where the forcing relates to a boot of a main process of the software program and the supervisor process is launched at each launching of the main process of the software program, the supervisor process counts its own boots and stores boot indexes related to its forced boot. In a variant, where the forcing relates to a boot of a watched process, the supervisor process can count the boots of a watched process (by updating, for instance, a boot count relating to the watched process when the shared memory zone between the watched process and the supervisor process is updated for the first time) and store the index relating to forced boots of the watched process. In another variant, where the supervisor process is launched independently of the main process of the software and the forcing relates to a main program of the software program, the supervisor process can count the boots of the main program (being considered as a particular watched process for instance) and store the index relating to forced boots of the main process.

In a variant, the supervisor process can force a boot of several processes (for instance a boot of at least one watched process and/or a boot of the software program) or a restart of the electronic device. In such an embodiment, the process that will be forced to boot can depend from several boot criteria. For instance, a supervisor process can first force a boot of a watched process and then, after a first given number of consecutive boots of the watched process during a specific duration, force the boot of the software program (or a restart of the electronic device where the software program is located) after a second given number of consecutive boots of the software program (or restart).

In some embodiments, the monitoring service offered by the dynamic library 120 can have, as a parameter, a callback method returning a status of the process invoking the callback method. For instance, the callback method is called periodically by a monitored thread T1, before performing the writing in a shared memory zone, and returns a status representative of the current state of the corresponding watched process. This status can notably belong to a given set of values. At least some of the values that can be taken by the status can indicate an abnormal state of the process. It can be for instance a Boolean. In the detailed embodiment, where the status is a Boolean, a returned value "false" indicates an abnormal state of the watched process. In other embodiments, the status can take more than two values. Different abnormal states can for instance be defined, in order to react differently depending on the abnormal state. For instance, a "critical" state can justify a forced reboot, but some others states do not necessitate such a reboot.

For instance, a status can belong to a set of enumerative values, or correspond to a mask giving more precise information about status of a process (with different values for "KO", "lack of memory", "lack of CPU", "one thread in deadlock",.......).

In an embodiment using a callback method, a monitored thread (by means of the software of the monitoring method dynamic library) can use the status returned by the callback method in order to decide to write or not in the shared memory zone. Indeed, in such a case, omitting to update the shared memory zone can be a way of generating a reacting of a supervisor process.

In other embodiments, that can eventually be combined with some of the preceding embodiments, the monitoring thread (by means of the software of the monitoring method dynamic library) can enrich the item of information to be written in the shared memory zone with the status returned by the watched process so that a supervisor process can process it.

In some embodiments, the dynamic library can propose a second monitoring service, in charge of launching a second thread with the same priority as the calling watched process, that periodically (for instance each second, each 5 seconds, each 10 seconds,...) write in a second shared memory zone a second item of information. This second item of information can be the same item of information as in the first shared memory zone or a different one). In such an embodiment, the monitoring method can comprise, as for the first memory zone, a reading of the second memory zone, a checking of an update of the second memory zone and a reacting. For instance, when the second thread has the same priority than the calling thread of the watched process, a lack of update of the second memory zone can permit detecting of a situation where the watched process is not being provided enough processing resource. In such an embodiment, the reacting can comprise generating an alert (for instance sending a SMS, or an email to a determined recipient, or rendering an audio alert, or printing a textual message).

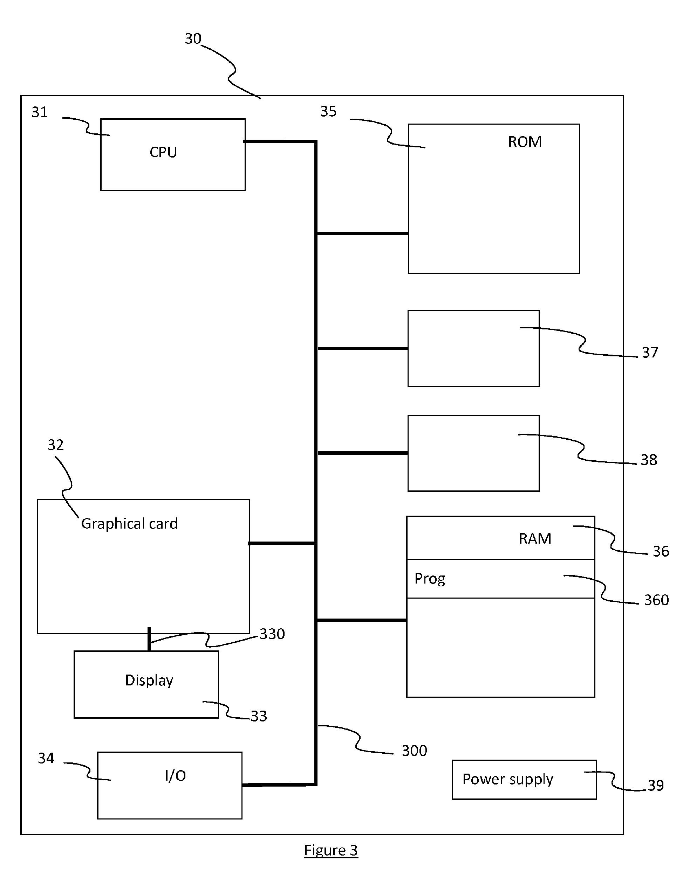

Figure 3 describes the structure of an electronic device 30 adapted notably to the execution of a supervisor process performing the monitoring method of the present disclosure. In some embodiments, the electronic device is also adapted to the execution of at least one watched process of software program.

In the particular embodiment of figure 3, the electronic device 30 can include different devices, linked together via a data and address bus 300, which can also carry a timer signal. For instance, it can include a micro-processor 31 (or CPU), a graphics card 32 (depending on embodiments, such a card may be optional), at least one Input/ Output module 34, (like a keyboard, a mouse, an LED, and so on), a ROM (or « Read Only Memory ») 35, a RAM (or « Random Access Memory ») 36. In the particular embodiment of figure 3, the electronic device can also comprise communication interfaces 37, 38 configured for the reception and/or transmission of data, via a wireless connection (notably of type WIFI® or Bluetooth), wired communication interfaces 38 (optional), a power supply 39. Those communication interfaces are optional.

In some embodiments, the electronic device 30 can also include, or be connected to, a display module 33, for instance a screen, directly connected to the graphics card 32 by a dedicated bus 330.

In the illustrated embodiment, the electronic device 30 can communicate with another device thanks to a wireless interface.

Each of the mentioned memories can include at least one register, that is to say a memory zone of low capacity (a few binary data) or high capacity (with a capability of storage of a whole program or of all or part of data representative of data to be calculated or displayed).

When the electronic device 30 is powered on, the microprocessor 31 loads the program instructions 360 in a register of the RAM 36, notably the program instruction needed for performing at least one embodiment of the monitoring method described herein, and executes the program instructions.

According to a variant, the electronic device 30 includes several microprocessors. According to another variant, the power supply 39 is external to the electronic device 30.

In the particular embodiment illustrated in figure 3, the microprocessor 31 can be configured for monitoring the execution of a software program comprising at least one watched process, said monitoring comprising periodic reading, by at least one supervisor process located in said electronic device, of at least one memory zone shared by said watched process and a supervisor process.

In the particular embodiment described, the processor is configured for:
- conditional forcing, by said supervisor process, of a booting of at least one process of said software program, said conditional forcing taking into account an update of a first read memory zone between at least two successive readings and at least one previous conditional forcing.

The electronic device 30 can notably belong to a communication system further comprising another electronic device (where some part of the software program, like a watched process, and/or some other supervisor process can be located for instance).

The present disclosure has been described in relation with a Unix-like operating system.

Of course, as it will be understandable for a person skilled in the art, the present disclosure may also been applied in a communication system using other operating system, notably in electronic devices using heterogeneous operating system.

As will be appreciated by one skilled in the art, aspects of the present principles can be embodied as a system, method, or computer readable medium. Accordingly, aspects of the present disclosure can take the form of an hardware embodiment, a software embodiment (including firmware, resident software, micro-code, and so forth), or an embodiment combining software and hardware aspects that can all generally be referred to herein as a "circuit", "module" or "system". Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage mediums to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it will be appreciated by those skilled in the art that the block diagrams presented herein represent conceptual views of illustrative system components and/or circuitry of some embodiments of the present principles. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

## Claims

1. A monitoring method, to be performed in at least on electronic device, for monitoring the execution of a software program comprising at least one watched process, said monitoring method comprising periodic reading, by at least one supervisor process, of at least one memory zone shared by said watched process and said supervisor process, said method being **characterized in that** it further comprises:
- conditional forcing, by said supervisor process, of a booting of at least one process of said software program, said conditional forcing taking into account an update of a first read memory zone between at least two successive readings and at least one previous conditional forcing.

2. The monitoring method according to claim 1 **characterized in that** said method further comprises maintaining, by said supervisor process, at least one boot counter located in a first non-volatile memory zone of said electronic device, a boot counter being representative of a number of boot of a process of said software program.

3. The monitoring method according to claim 2 **characterized in that** said boot counter is representative of at least one item belonging to a group comprising:
- a number of boot of said watched process;
- a number of boot of said supervisor process;
- a number of boot of a main process of said software program.

4. The monitoring method according to claim 1 to 3 **characterized in that** said conditional forcing takes into account at least one element belonging to a group comprising:
- a number of consecutive forced boots of said watched process;
- a number of consecutive forced boots of said supervisor process;
- a number of consecutive forced boots of a main process of said software program;
- a number of consecutive forced boots of said supervisor process related to said watched process;
- a number of consecutive forced boots of a main process of said supervisor process related to said watched process;
- a number of forced boots of said watched process during a reference period of time ;
- a number of forced boots of said supervisor process during a reference period of time ;
- a number of forced boots of a main process of said software program during a reference period of time ;
- a number of forced boots of said supervisor process related to said watched process during a reference period of time;
- a number of forced boots of a main process of said software program related to said watched process during a reference period of time.

5. The monitoring method according of at least one of claims 1 to 4 **characterized in that** said conditional forcing further depends on the sensitivity of said watched process.

6. The monitoring method according of at least one of claims 1 to 5 **characterized in that** said software program comprises a plurality of watched processes and the memory zones of at least two watched processes are adjacent.

7. The monitoring method according of at least one of claims 1 to 6 **characterized in that** said method further comprises:
- a reacting of said supervisor process taking into account an update of a second read memory zone between at least two successive readings.

8. The monitoring method according of at least one of claims 1 to 7 **characterized in that** it further comprises generating an alert according to the update of said first and/or second read memory zone.

9. The monitoring method according of at least one of claims 1 to 8 **characterized in that** said shared memory zone is only accessible by said watched process and said supervisor process.

10. The monitoring method according to at least one of claims 1 to 9 **characterized in that** it comprises:
- launching of a monitored thread, by said watched process ;
- periodic writing, by said monitored thread, of an item of information in said shared memory zone.

11. The monitoring method according to claim 10 **characterized in that** said item of information comprises at least one element belonging to a group of elements constituted of:
- an identifier of said watched process;
- an incremental counter;
- a time stamp of said writing;
- a monitoring data related to said watched process.

12. An electronic device, comprising at least one memory and at least one processor, said processor being configured for monitoring the execution of a software program comprising at least one watched process, said monitoring comprising periodic reading, by at least one supervisor process, of at least one memory zone shared by said watched process and said supervisor process, said electronic device being **characterized in that** said processor is configured for:
- conditional forcing, by said supervisor process, of a booting of at least one process of said software program, said conditional forcing taking into account an update of a first read memory zone between at least two successive readings and at least one previous conditional forcing.

13. System comprising at least one first and a second electronic devices, said first electronic device comprising at least one memory and at least one processor, said processor being configured for monitoring the execution of a software program comprising at least one watched process located in said second device, said monitoring comprising periodic reading, by at least one supervisor process located in said first electronic device, of at least one memory zone shared by said watched process and said supervisor process, said communication system being **characterized in that** said processor is configured for:
- conditional forcing, by said supervisor process, of a booting of at least one process of said software program, said conditional forcing taking into account an update of a first read memory zone between at least two successive readings and at least one previous conditional forcing.

14. A non-transitory computer readable program product, **characterized in that** it comprises program code instructions for performing the monitoring method according to at least one of claims 1 to 11, when said non-transitory software program is executed by a computer.

15. Computer readable storage medium carrying a software program **characterized in that** it comprises program code instructions for performing the monitoring method according to at least one of claims 1 to 11, when said non-transitory software program is executed by a computer.
